# EUROPEAN PATENT SPECIFICATION

(11) **EP 3 308 979 B1**
(45) Date of publication and mention of the grant of the patent: **24.08.2022**
(21) Application number: 17196805.0
(22) Date of filing: 17.10.2017
(51) Int. Cl.: B60C 11/11, B60C 11/13, B60C 11/03

(54) **PNEUMATIC TIRE**
LUFTREIFEN
PNEUMATIQUE

(30) Priority: 17.10.2016 KR 20160134640
(43) Date of publication of application: 18.04.2018
(73) Proprietor: Hankook Tire Co., Ltd., Seoul 06133 (KR)
(72) Inventor: PARK, Ji Hun, 34116 Daejeon (KR)
(74) Representative: Stöckeler, Ferdinand

(56) References cited:
- EP-A1- 0 455 925
- EP-A1- 1 619 050
- EP-A1- 1 676 693
- EP-A2- 0 936 088
- JP-A- H11 301 216
- JP-A- S63 306 904
- JP-A- 2002 234 313
- US-A- 5 891 276

## Description

### BACKGROUND OF THE INVENTION

### Field of the Invention

The present invention relates to a pneumatic tire with improved wear resistance, and more particularly, to a pneumatic tire which improves uneven heel and toe wear on tread blocks of truck and bus radial (TBR) tires.

### Discussion of the Related Art

In pneumatic car tires, especially, truck and bus radial (TBR) tires, heel and toe wear, a type of uneven wear on tread blocks, occurs frequently. Heel and toe wear happens when a part of a block that touches down first wears more slowly than a part that touches down later. The leading portion of the block, which wears at a slower rate, is called a heel, and the tailing portion, which wears at a faster rate, is called a toe.

In order to reduce the aforementioned heel and toe wear, a structure for minimizing distortion of the heel part touching down first is employed. When driving a tire, force is exerted on the heel part in a direction opposite to which the car is traveling, and the rubber block is pushed back. Since rubber is incompressible, a lot of pressure is exerted on the toe part when the rubber block is pushed back, and this rapidly increase the slip velocity when the block slips away from the ground, thereby causing a lot of wear on the toe part. Accordingly, in order to minimize distortion of the heel part, the sides of grooves on the heel part are gently sloped, while the sides of the toe part are nearly vertical. However, it is difficult to reduce heel and toe wear by changing the angle of the sides of the grooves to reduce rubber distortion. This is due to an abrupt decrease in the force of friction on the toe part, which is caused by a rise in ground contact pressure on the toe part. Hence, there is a need for designs that increase the force of friction on the toe part.

Hereinafter, conventional technologies for improving the above-described uneven heel and toe wear problem will be described. Identification numbers used in the conventional technologies are irrelevant to the present application.

Korean Utility Model Registration No. 0125391 discloses a tire with improved wear resistance which can improve the wear resistance of a tread portion by forming grooves defining blocks on the tread portion and sipes on the blocks which slope at different angles on both sidewalls. Conventionally, the grooves 20 and the sipes 30 slope at the same angle on both sidewalls, so both sidewalls 22 and 24 of the grooves and both sidewalls 32 and 34 of the sipes do not wear at the same rate because of frequent braking and driving of the tire, but one sidewall, that is, the sidewall 24 and 34 positioned opposite to the direction of rotation of the tire, wears more quickly (heel and toe wear) than the sidewall 22 and 32 on the other side, thus shortening the overall lifespan of the tire. In view of this, the disclosure No. 0125391 is aimed at providing a tire with improved wear resistance which can extend the lifespan of the tire by allowing sidewalls forming grooves and sipes to wear at the same rate. Of the two sidewalls 22 and 24 of the grooves 20, the sloping angle θb of the sidewall 24 aligned to the direction of rotation of the tire is obtuse and the sloping angle θa of the opposite sidewall 22 is acute. Likewise, of the two sidewalls 32 and 34 of the sipes 30, the sloping angle θd of the sidewall 34 aligned to the direction of rotation of the tire is obtuse and the sloping angle θc of the opposite sidewall 32 is acute. In the disclosure No. 0125391, as described above, the sides of grooves on the heel part are gently sloped, while the sides of the toe part are nearly vertical. As previously mentioned, there may be an abrupt decrease in the force of friction on the toe part, which is caused by a rise in ground contact pressure on the toe part, thus making it difficult to reduce heel and toe wear.

Patent Registration No. 10-0782462 relates to a kerf structure for tread blocks with improved block wear resistance which minimizes changes in the tire's performance by reducing wear on the tire's tread blocks, and prevents heel and toe wear by alleviating impact on the block. In a tire tread's block pattern structure comprising a center block group 1 having radially zigzag kerfs K1 formed with respect to the centerline CL of the circumference of the tire, a middle block group 4 having radially zigzag kerfs K2 formed with the center block group 1 and circumferential grooves 2 and 3 in between, and a peripheral block group 5, a plurality of radially linear kerfs K3 and circumferential zigzag kerfs K4 on the tire intersecting each other are formed on individual blocks 5a of the peripheral block group 5, and the circumferential zigzag kerfs K4, starting ahead of the direction of travel of the tire, are spaced a width W2 apart from the end portion of the blocks 5a. Although the disclosure No. 10-0782462 attempted to overcome heel and toe wear through the kerfs on the blocks, it was difficult to expect good results because the narrow and deep kerfs cause a decline in the overall stiffness of the blocks and are filled with foreign materials while driving.

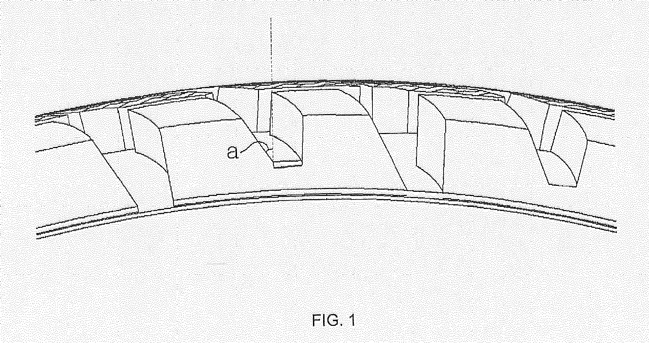

FIG. 1 is an example view of the conventional art explaining heel and toe wear. Referring to FIG. 1, as described above, in the conventional art, the sides of grooves on the heel part are gently sloped, while the sides of the toe part are nearly vertical, in order to minimize distortion of the heel part. However, as previously mentioned, it is difficult to reduce heel and toe wear by changing the angle of the sides of the grooves to reduce rubber distortion. This is due to an abrupt decrease in the force of friction on the toe part, which is caused by a rise in ground contact pressure on the toe part. Hence, there is a need for designs that increase the force of friction on the toe part.

Other prior art includes EP 1 1619 050 A1, EP0455925A1, EP 0 936 088 A1, EP 1 676 693 A1, US 5 891 276 A, JP S63 306904 A, JP 2002 234313 A and JP H11 301216 A.

### SUMMARY OF THE INVENTION

It is an object of the present invention to provide a pneumatic tire which can effectively improve heel and toe wear without deteriorating the stiffness of tread blocks and the water drainage performance.

This object is achieved by a pneumatic tire according to claim 1.

The present invention provides a pneumatic tire including a tread, sidewalls, and a bead portion, with blocks and grooves formed in the top surface of the tread, in which ground contact pressure reducing blocks are mounted in the grooves along the direction of travel that adjoin the blocks, adjacent to forward directional tailing portions of the blocks. The direction-of-travel width of the ground contact pressure reducing blocks is 5 to 20% of the direction-of-travel length of the blocks. The transverse width of the ground contact pressure reducing blocks is 70 to 90% of the width of the grooves in which the ground contact pressure blocks are mounted.

In the exemplary embodiment of the present invention, connecting ribs may be mounted to connect the ground contact pressure reducing blocks.

In the exemplary embodiment of the present invention, the height of the ground contact pressure reducing blocks may be equal to the depth of the grooves in which the ground contact pressure blocks are mounted.

In the exemplary embodiment of the present invention, the height of the connecting ribs may be 10 to 50% of the depth d of the grooves.

In the exemplary embodiment of the present invention, the width of the connecting ribs may be 10 to 30% of the width of the grooves to which the connecting ribs are mounted.

In the exemplary embodiment of the present invention, one end of the ground contact pressure reducing blocks along the transverse direction may adjoin the blocks.

According to the exemplary embodiment of the present invention, ground contact pressure can be instantaneously reduced by maintaining uniform distribution of ground contact pressure along the groove edges by increasing the ground contact area of the tailing portions of the tread blocks, thereby suppressing heel and toe wear.

The effects of the present invention are not limited to the above, but they should be construed as encompassing all the effects that can be inferred from a detailed description of the present invention or a construction of the invention set forth in the claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIG. 1 is an example view of the conventional art explaining heel and toe wear;
FIG. 2 is a perspective view showing the main parts of a pneumatic tire according to the present invention;
FIG. 3 is a graph explaining the relationship between ground contact pressure and friction coefficient; and
FIG. 4 is a perspective view showing the main parts of a pneumatic tire according to another exemplary embodiment of the present invention.

### DETAILED DESCRIPTION OF THE ILLUSTRATED EMBODIMENTS

Hereinafter, the present invention will be described with reference to the accompanying drawings. The exemplary embodiments may, however, be embodied in many different forms without departing from the scope of the appended claims and should not be construed as limited to the exemplary embodiments set forth herein. In the drawings, parts irrelevant to the descriptions are omitted for clarity, and like reference numerals refer to like parts throughout the specification.

Throughout the specification, reference to a certain portion being "connected" to another portion not only encompasses cases of being "directly connected" but also encompasses cases of being "indirectly connected" by way of another member positioned in-between. When a certain part is described as "including" another component, this means that the part can further include other components and is not meant to exclude other components unless explicitly mentioned otherwise.

The terms used in the specification are intended to describe particular embodiments only, and shall by no means be restrictive. Unless clearly used otherwise, expressions in a singular form include a meaning of a plural form. In the present description, an expression such as "comprising" or "including" is intended to designate a characteristic, a number, a step, an operation, an element, a part or combinations thereof, and shall not be construed to preclude any presence or possibility of one or more other characteristics, numbers, steps, operations, elements, parts or combinations thereof.

Hereinafter, an exemplary embodiment of the present invention will be described in detail with reference to the accompanying drawings.

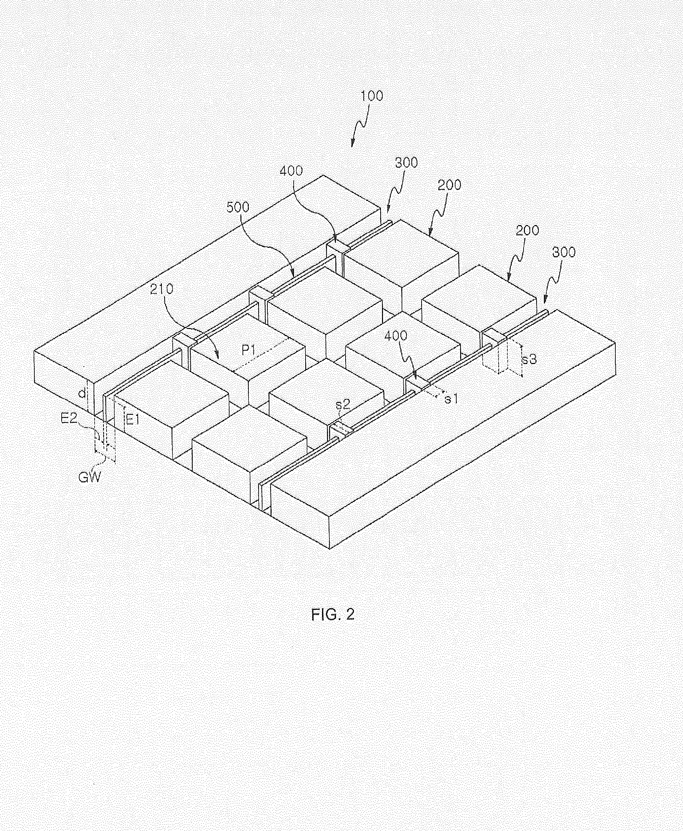

FIG. 2 is a perspective view showing the main parts of a pneumatic tire according to the present invention.

As shown in FIG. 2, the present invention provides a pneumatic tire including a tread 100, sidewalls, and a bead portion, with blocks 200 and grooves 300 formed in the top surface of the tread 100, in which ground contact pressure reducing blocks 400 are mounted in the grooves 300 along the direction of travel adjoining the blocks 200, adjacent to forward directional tailing portions 210 of the blocks 200.

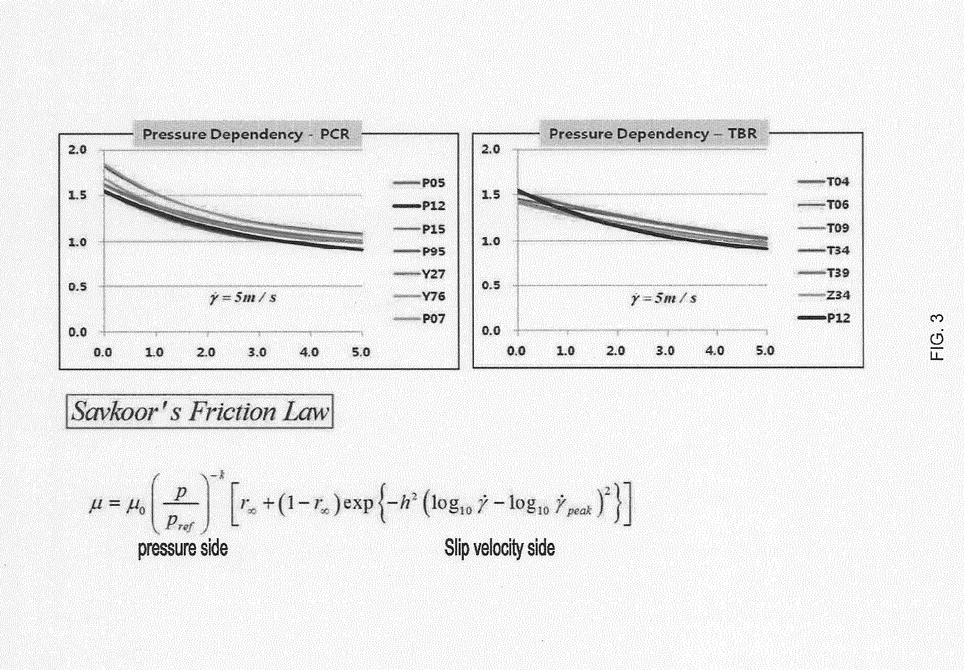

As the ground contact pressure blocks 400 are mounted to the forward directional tailing portions 210 corresponding to the toe parts of the blocks 200, ground contact pressure can be instantaneously reduced by maintaining uniform distribution of ground contact pressure along the groove edges by increasing the ground contact area of the tailing portions of the tread blocks when coming into contact with the ground, thereby suppressing heel and toe wear. The increase in ground contact area leads to a decrease in ground contact pressure. Referring to FIG. 3, the relationship between ground contact pressure and friction coefficient conforms to Savkoor's friction law, which corresponds to a graph in which the friction coefficient increases with decreasing pressure, thus reducing the amount of slip. The first graph of FIG. 3 shows measurements on passenger car radial (PCR) tires, and the second graph shows measurements on truck and bus radial (TBR) tires. From the measurements in both graphs, it can be seen that the friction coefficient decreases with increasing pressure according to Savkoor's friction law.

To effectively distribute ground contact pressure when the toe parts of the blocks 200 come into contact with the ground, the direction-of-travel width s1 of the ground contact pressure reduction blocks 400 is 5 to 20% of the direction-of- travel length P1 of the blocks 200, the transverse width s2 is 70 to 90% of the width GW of the grooves 300 in which the ground contact pressure blocks 400 are mounted, and the height s3 of the ground contact pressure reducing blocks 400 may be equal to the depth d of the grooves 300 in which the ground contact pressure blocks 400 are mounted. These numerical values are meaningful values that allow for uniform distribution of ground contact pressure on the toe parts, minimize the constraints on the water drainage performance, etc. of the grooves 300, and make the ground contact pressure reducing blocks 400 distinguishable from neighboring, plain blocks.

The ground contact pressure reducing blocks 400 have the above dimensions so as not to impair the water drainage performance, etc. of the grooves 300. With these dimensions, however, the durability of the ground contact pressure reducing blocks 400 may be lowered. Accordingly, connecting ribs 500 may be mounted to connect the ground contact pressure reducing blocks 400. The height E1 of the connecting ribs 500 may be 10 to 50% of the depth d of the grooves 300, and the width E2 of the connecting ribs 500 may be 10 to 30% of the width GW of the grooves 300 to which the connecting ribs 500 are mounted.

These numerical values are meaningful values that increase the durability of the individual ground contact pressure reducing blocks 400 and minimize the adverse effects on the water drainage performance, etc. of the grooves 300.

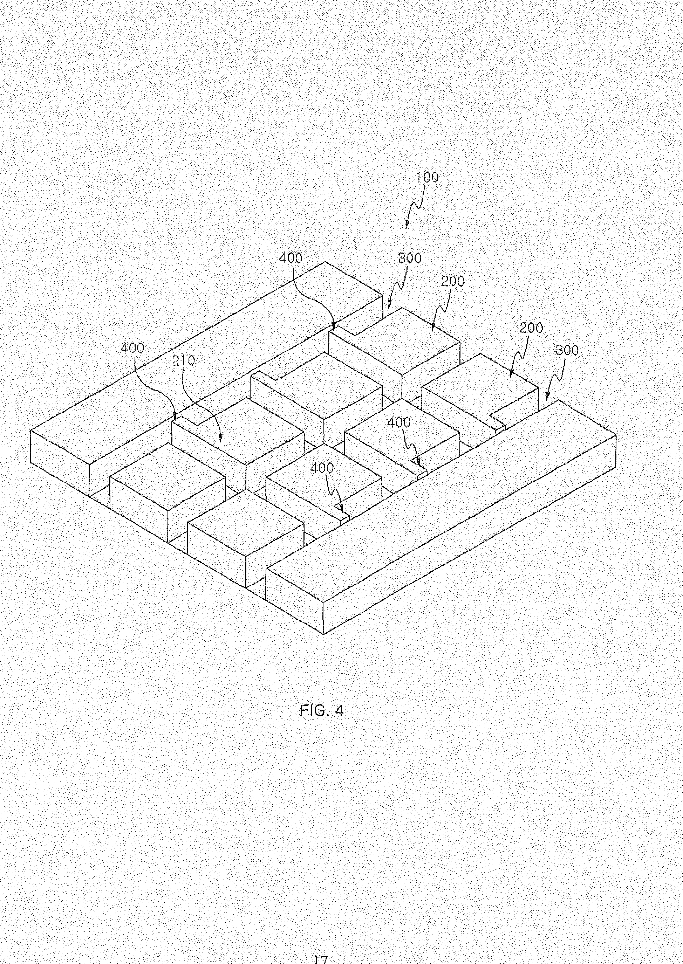

In another exemplary embodiment, the present invention provides a pneumatic tire in which one end of the ground contact pressure reducing blocks 400 along the transverse direction adjoins the blocks 200, as shown in FIG. 4. As described above, with the above dimensions, the durability of the ground contact pressure reducing blocks 400 may be lowered. Therefore, this exemplary embodiment may use a configuration in which one end of the ground contact pressure reducing blocks 400 along the transverse direction adjoins the blocks 200, as a way to substitute for the connecting ribs 500 of FIG. 2. With this configuration, the durability of the ground contact pressure reducing blocks 400 may be greatly enhanced. Preferably, the ground contact pressure reducing blocks 400 according to this exemplary embodiment may have the dimensions given in the previous exemplary embodiment.

The aforementioned description is provided for purposes of illustration and description. It will be appreciated by those skilled in the art that various modifications may be readily made without departing from the scope of the appended claims. Thus, the exemplary embodiments should be understood to be illustrative in every aspect and not to be limiting. For example, each constituent element described in a singular form may be distributed and thereby implemented. Likewise, constituent elements described to be distributed may be implemented in a combined form.

The scope of the invention is within the claims rather than the detailed description.

## Claims

1. A pneumatic tire comprising a tread (100), sidewalls, and a bead portion, with blocks (200) and grooves (300) formed in the top surface of the tread (100), in which ground contact pressure reducing blocks (400) are mounted in the grooves (300) along the direction of travel that adjoin the blocks (200), adjacent to forward directional tailing portions (210) of the blocks (200),
wherein the direction-of-travel width (s1) of the ground contact pressure reducing blocks (400) is 5 to 20% of the direction-of-travel length (P1) of the blocks (200),
**characterized in that**
the transverse width (s2) of the ground contact pressure reducing blocks (400) is 70 to 90% of the width (GW) of the grooves (300) in which the ground contact pressure blocks (400) are mounted.

2. The pneumatic tire of claim 1, wherein connecting ribs (500) are mounted to connect the ground contact pressure reducing blocks (400).

3. The pneumatic tire of claim 1, wherein the height (s3) of the ground contact pressure reducing blocks (400) is equal to the depth (d) of the grooves (300) in which the ground contact pressure blocks (400) are mounted.

4. The pneumatic tire of claim 2, wherein the height (E1) of the connecting ribs (500) is 10 to 50% of the depth (d) of the grooves (300).

5. The pneumatic tire of claim 2, wherein the width (E2) of the connecting ribs (500) may be 10 to 30% of the width (GW) of the grooves (300) to which the connecting ribs (500) are mounted.

6. The pneumatic tire of claim 1 or 3, wherein one end of the ground contact pressure reducing blocks (400) along the transverse direction adjoins the blocks (200).

## Patentansprüche

1. Ein Luftreifen, der eine Lauffläche (100), Seitenwände und einen Wulstabschnitt aufweist, mit Blöcken (200) und Rillen (300), die in der oberen Oberfläche der Lauffläche (100) gebildet sind, wobei in den Rillen (300) entlang der Bewegungsrichtung Bodenkontaktdruck-reduzierende Blöcke (400) angebracht sind, die an die Blöcke (200) angrenzen, benachbart zu vorwärts gerichteten nachlaufenden Abschnitten (210) der Blöcke (200),
wobei die Bewegungsrichtungsbreite (s1) der Bodenkontaktdruck-reduzierenden Blöcke (400) 5 bis 20 % der Bewegungsrichtungslänge (P1) der Blöcke (200) beträgt,
**dadurch gekennzeichnet, dass**
die Querbreite (s2) der Bodenkontaktdruck-reduzierenden Blöcke (400) 70 bis 90 % der Breite (GW) der Rillen (300) beträgt, in denen die Bodenkontaktdruckblöcke (400) angebracht sind.

2. Der Luftreifen gemäß Anspruch 1, bei dem Verbindungsrippen (500) angebracht sind, um die Bodenkontaktdruck-reduzierenden Blöcke (400) zu verbinden.

3. Der Luftreifen gemäß Anspruch 1, bei dem die Höhe (s3) der Bodenkontaktdruck-reduzierenden Blöcke (400) gleich der Tiefe (d) der Rillen (300) ist, in denen die Bodenkontaktdruckblöcke (400) angebracht sind.

4. Der Luftreifen gemäß Anspruch 2, bei dem die Höhe (E1) der Verbindungsrippen (500) 10 bis 50 % der Tiefe (d) der Rillen (300) beträgt.

5. Der Luftreifen gemäß Anspruch 2, bei dem Breite (E2) der Verbindungsrippen (500) 10 bis 30 % der Breite (GW) der Rillen (300) betragen kann, an denen die Verbindungsrippen (500) befestigt sind.

6. Der Luftreifen gemäß Anspruch 1 oder 3, bei dem ein Ende der Bodenkontaktdruck-reduzierenden Blöcke (400) entlang der Querrichtung an die Blöcke (200) angrenzt.

## Revendications

1. Pneumatique comprenant une bande de roulement (100), des parois latérales et une partie de talon, avec des blocs (200) et des rainures (300) formés dans la surface supérieure de la bande de roulement (100), dans lequel des blocs de réduction de pression de contact avec le sol (400) sont montés dans les rainures (300) dans la direction de déplacement qui jouxtent les blocs (200), adjacents aux parties arrières dans la direction vers l'avant (210) des blocs (200),
dans lequel la largeur dans la direction de déplacement (s1) des blocs de réduction de pression de contact avec le sol (400) est de 5 à 20 % de la longueur dans la direction de déplacement (P1) des blocs (200),
**caractérisé par le fait que**
la largeur transversale (s2) des blocs de réduction de pression de contact avec le sol (400) est de 70 à 90 % de la largeur (GW) des rainures (300) dans lesquelles sont montés les blocs de pression de contact avec le sol (400).

2. Pneumatique selon la revendication 1, dans lequel sont montées des nervures de connexion (500) pour connecter les blocs de réduction de pression de contact avec le sol (400).

3. Pneumatique selon la revendication 1, dans lequel la hauteur (s3) des blocs de réduction de pression de contact avec le sol (400) est égale à la profondeur (d) des rainures (300) dans lesquelles sont montés les blocs de pression de contact avec le sol (400).

4. Pneumatique selon la revendication 2, dans lequel la hauteur (E1) des nervures de connexion (500) est de 10 à 50 % de la profondeur (d) des rainures (300).

5. Pneumatique selon la revendication 2, dans lequel la largeur (E2) des nervures de connexion (500) peut être de 10 à 30 % de la largeur (GW) des rainures (300) sur lesquelles sont montées les nervures de connexion (500).

6. Pneumatique selon la revendication 1 ou 3, dans lequel une extrémité des blocs de réduction de pression de contact avec le sol (400) dans la direction transversale jouxte les blocs (200).
